# EUROPÄISCHE PATENTANMELDUNG

(11) **EP 4 797 529 A1**
(43) Veröffentlichungstag der Anmeldung: **26.08.2026**
(21) Anmeldenummer: 26159930.2
(22) Anmeldetag: 20.02.2026
(51) Int. Cl.: H02S 10/30, F24S 10/70, H02S 40/44

(54) **PHOTOVOLTAIK-THERMIE-ANLAGE**

(30) Priorität: 20.02.2025 CH 1582025
(71) Anmelder: caldoa GmbH, 88046 Friedrichshafen (DE)
(72) Erfinder: Bircher, Alex, 6403 Küssnacht (CH); Ramani, Dritan, 7012 Felsberg (CH)
(74) Vertreter: Swisspat Riederer Hasler Patentanwälte AG

(57) **Zusammenfassung**

Die Erfindung betrifft eine Photovoltaik-Thermie (PVT)-Anlage (11) zur kombinierten Strom- und Wärmeproduktion aufweisend eine Mehrzahl von Photovoltaik(PV)-Modulen (13) und eine Mehrzahl von Wärmetauschern (17), welche jeweils an der der Sonne abgewandten Rückseite (15) der PV-Module (13) angeordnet sind und von einem Wärmeträgerfluid durchströmte Leitungen umfassen, wobei die Leitungen in einem Abstand zu den PV-Modulen (13) angeordnet sind. Die Wärmetauscher (17) sind durch wenigstens eine von dem Wärmeträgerfluid durchströmte Rohrleitung (33) gebildet, welche Rohrleitung (33) sich über eine Mehrzahl von in einer Reihe angeordneten PV-Modulen (13) erstreckt und eine Vorlaufleitung (19) mit einer Rücklaufleitung (21) verbindet,

## Beschreibung

### Gebiet der Erfindung

Die Erfindung betrifft eine Photovoltaik-Thermie (PVT)-Anlage zur kombinierten Strom-und Wärmeproduktion gemäss Oberbegriff des Anspruches 1.

### Stand der Technik

Zur Herstellung von Photovoltaik-Thermie-Modulen (PVT-Module), werden Photovoltaik-Module (PV-Module) mit Wärmeüberträgern kombiniert, um Strom und Wärme kombiniert erzeugen zu können. Der Wirkungsgrad der PV-Module verbessert sich, da diese durch die Übertragung von Wärme gekühlt werden und dadurch in einem günstigen Temperaturfenster betrieben werden können.

Allerdings sind die an der Rückseite der PV-Module montierten Wärmeübertrager Aufwendig in der Herstellung, da deren Wärmeaustauschfläche mit dem PV-Modul aber auch mit der Umgebungsluft möglichst gross sein soll, falls das PV-Modul für eine Luft-Wärmepumpe benutzt werden soll. Zudem muss jeder Wärmeübertrager bzw. Wärmetauscher zur Weiterleitung des Wärmeträgerfluids mit benachbarten Wärmetauschern oder einer Vorlauf- und einer Rücklaufleitung verbunden werden. Dies stellt einen aufwendigen Montageschritt auf der Baustelle dar.

### Aufgabe der Erfindung

Aus den Nachteilen des beschriebenen Stands der Technik resultiert die Aufgabe, eine PVT-Anlage zu zeigen, bei welcher der oder die Wärmetauscher möglichst einfach aufgebaut sind und auf der Baustelle rasch montierbar sind.

### Beschreibung

Die Lösung der gestellten Aufgabe gelingt bei einer Photovoltaik-Thermie (PVT)-Anlage zur kombinierten Strom- und Wärmeproduktion durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Erfindung zeichnet sich dadurch aus, dass die Wärmetauscher durch wenigstens eine von dem Wärmeträgerfluid durchströmte Rohrleitung gebildet sind, welche Rohrleitung sich über eine Mehrzahl von in einer Reihe angeordneten PV-Modulen erstreckt und eine Vorlaufleitung mit einer Rücklaufleitung verbindet,

In einer besonders bevorzugten Ausführungsform der Erfindung sind die Wärmetauscher durch eine Mehrzahl von nebeneinander angeordneten Rohrleitungen gebildet, welche sich über eine Mehrzahl von in einer Reihe angeordneten PV-Modulen erstrecken, wobei die Rohrleitungen in Parallelschaltung eine Vorlaufleitung mit einer Rücklaufleitung verbinden. Dadurch wird nicht in aufwendiger Weise für jedes PV-Modul ein eigener Wärmetauscher benötigt, sondern die Rohrleitungen werden einfach an der Rückseite von vielen PV-Modulen angeordnet. In überraschender Weise ist der Wärmeaustausch zwischen den PV-Modulen und den Rohrleitungen trotz dem einfachen Aufbau ausreichend, um einen guten Wirkungsgrad zu erhalten. Ein weiterer grosser Vorteil der Erfindung ist, dass sich die Rohrleitungen an allen bestehenden PV-Anlagen nachrüsten lassen.

Falls die Wärmetauscher durch eine einzige Rohrleitung gebildet sind, ist die Rohrleitung an der Rückseite einzelner PV-Moduls oder sich über mehrere PV-Module erstreckend möglichst flächendeckend und insbesondere mäanderförmig angeordnet. Dadurch kann mit einer einzigen Rohrleitung ein guter Wärmeaustausch mit einer Mehrzahl von PV-Modulen erzielt werden. Denkbar ist es, dass sich die Mäanderbögen der Rohrleitung über alle PV-Module der PV-Anlage erstrecken. Dadurch können der Einlauf und der Auslauf der Rohrleitung direkt in die Vorlaufleitung und die Rücklaufleitung übergehen.

In einer weiteren besonders bevorzugten Ausführungsform der Erfindung sind die Rohrleitungen biegbare Wellrohre. Diese lassen sich in einfacher Weise aus dem eingerollten Zustand abrollen und direkt an den PV-Modulen auf der Baustelle befestigen. Die gewellte Struktur sorgt für eine Oberflächenvergrößerung und dadurch für einen guten Wärmeaustausch an der Rohrwandung. Zudem lassen sich Halterungen und Montageöffnungen, welche nicht genau fluchten, von den flexiblen Wellrohren ausgleichen. Steife Rohrleitungen würden bei nicht genauer Fluchtung sich nicht oder nur schwer in die Halterungen einlegen lassen. Zudem können Wellrohre durch ihre Flexibilität auch an der Rückseite von PV-Modulen verlegt werden, welche in einem Winkel zueinander aufgestellt sind. Auch andere oberflächenvergrössernde Leitungen sind denkbar.

In einer weiteren bevorzugten Ausführungsform sind die Rohrleitungen frei von thermischen Leitungen zu den PV-Modulen, wodurch die Wärmeübertragung von den PV-Modulen auf die Rohrleitungen über die Umgebungsluft durch Wärmestrahlung erfolgt. Dadurch benötigen die Rohrleitungen keine aufwendigen wärmeleitenden Verbindungen zu den PV-Modulen, sondern werden einfach möglichst nahe an der Rückseite der PV-Module verlegt. Nachdem die Wellrohre flexibel sind, lassen sie sich auch innerhalb des standardmässigen Versteifungsrahmens eines jeden PV-Moduls verlegen bzw. einziehen, um möglichst nahe an der Rückseite der PV-Module angeordnet zu sein.

Als zweckdienlich hat es sich erwiesen, wenn die Rohrleitungen eine Länge zwischen 10 und 100 Meter und bevorzugt zwischen 20 und 50 Meter aufweisen. Insbesondere mit Wellrohren, welche im aufgerollten Zustand auf die Baustelle geliefert werden, lassen sich grosse Rohrlängen realisieren, wodurch sich die Rohrleitungen über eine grosse Anzahl von nebeneinander aufgestellten PV-Modulen erstrecken können. Aufwendige Anschluss- oder Verbindungarbeiten, wie bei üblichen Wärmetauschern notwendig, entfallen.

Zweckmässigerweise umfasst die PVT-Anlage Montageständer mit schrägen Montagebalken an welchen die PV-Module schräg gestellt montiert sind. Die zwangsläufig vorhandenen Montageständer können zur Befestigung der Rohrleitungen genutzt werden. Dazu sind bevorzugt die Rohrleitungen mit Halterungen an den Montagebalken befestigt. Denkbar ist es auch, dass die Rohrleitungen mit Halterungen direkt an den PV-Modulen befestigt sind.

In einer weiteren besonders bevorzugten Ausführungsform sind die Rohrleitungen in einer Rahmenkonstruktion gehalten. Bevorzugt ist die Rahmenkonstruktion zwischen den Montagebalken und den PV-Modulen angeordnet. Durch die Schwerkraft liegen die eingelegten Rohrleitungen von vorneherein in der Rahmenkonstruktion und werden von oben durch die aufgelegten PV-Module gesichert. Demnach ist diese Art der Rohrbefestigung besonders rasch und einfach durchzuführen.

In einer weiteren Ausführungsform der Erfindung ist die Rahmenkonstruktion an der der Rückseite der PV-Module abgewandten Seite der Montagebalken befestigt. Bei dieser Art der Befestigung müssen die Rohrleitungen vor dem Herausfallen aus der Rahmenkonstruktion nach unten gesichert werden. Alternativ können die Rohrleitungen durch Montageöffnungen der Rahmenkonstruktion eingezogen sein. Die Rohrleitungen sind in dieser Ausführungsform besonders gut zugänglich. Diese Ausführungsform ist auch gut für das Nachrüsten einer bestehenden PV-Anlage geeignet, da für die Montage der Rohrleitungen die PV-Module nicht von den Montageständern demontiert werden müssen.

Die Erfindung zeichnet sich auch bevorzugt dadurch aus, dass die Rahmenkonstruktion offene Rohraufnahmen von dem Montagebalken abgewandt aufweist und die Rohrleitungen in die offenen Rohraufnahmen eingelegt sind. Das Einlegen oder Einziehen von an die Baustelle aufgewickelt gelieferten Wellrohren erfolgt besonders rasch und einfach, ohne dass Rohrschellen angezogen werden müssten oder Rohre verbunden werden müssten.

Bevorzugt weisen die Rohrleitungen einen Durchmesser von 15 bis 35 mm und bevorzugt von 20 bis 30 mm auf. Bei dieser Durchmesserwahl ist ein gutes Verhältnis zwischen Wärmeübergang und Durchflussgeschwindigkeit und -widerstand möglich.

In bevorzugter Weise weist der Mantel einer Rohrleitung einen Abstand von 5 bis 100 mm zur Rückseite der PV-Module auf. Dadurch kann durch die Wärmestrahlung über die Umgebungsluft eine ausreichende Wärmemenge von den PV-Modulen an den Wärmeträger in den Rohrleitungen übertragen werden. Der Wärmeträger bzw. das Wärmeträgerfluid kann beispielsweise eine Glykol-Wasser Mischung sein.

Zweckmässigerweise befinden sich zwischen 5 und 30 und bevorzugt zwischen 10 und 15 Rohrleitungen an der Rückseite von nebeneinander angeordneten PV-Modulen. Dadurch ist ein möglichst grosser Anteil der wärmeabstrahlenden Rückseiten der PV-Module mit Rohrleitungen abgedeckt und ein grosser Anteil der Wärmemenge wird von dem Wärmeträgerfluid aufgenommen.

Durch die gewählte Anzahl der Rohre ergibt sich bevorzugt der Abstand zwischen den Mänteln benachbarter Rohrleitungen zwischen 40 und 250 und bevorzugt zwischen 60 und 150 mm. Durch diese Spalten entweicht wenig Wärme, wodurch sich ein guter Wirkungsgrad der PV-Anlage ergibt.

Zweckmässigerweise bilden eine Mehrzahl von nebeneinander angeordneten PV-Modulen und dahinter liegenden Rohrleitungen eine PV-Phalanx und die Rohrleitungen mehrerer Phalanxen sind an die Vorlauf- und die Rücklaufleitung angeschlossen. Dadurch lässt sich eine gesamte PVT-Anlage als Solarfeld aufbauen und die Rohrleitungen verschiedener Phalanxen können alle an die gleiche Vorlauf- und Rücklaufleitung angeschlossen werden. In bevorzugter Weise müssen zwischen eine PV-Phalanx und die Rücklauf- bzw. die Vorlaufleitung keine Sammelbank zur Wärmeträgerverteilung zwischengeschaltet werden.

Weitere Vorteile und Merkmale ergeben sich aus der nachfolgenden Beschreibung mehrerer Ausführungsbeispiele der Erfindung unter Bezugnahme auf die schematischen Darstellungen. Es zeigen in nicht massstabsgetreuer Darstellung:
- Figur 1:: eine PVT-Anlage gemäss dem Stand der Technik in einer ersten Ausführungsform;
- Figur 2:: eine PVT-Anlage gemäss dem Stand der Technik in einer zweiten Ausführungsform mit mehreren Sammelbanken;
- Figur 3:: eine erfindungsgemässe PVT-Anlage in einer ersten Ausführungsform;
- Figur 4:: einen Ausschnitt der PVT-Anlage aus Figur 3 in einer Seitenansicht in einer ersten Ausführungsform
- Figur 5:: einen Ausschnitt der PVT-Anlage aus Figur 3 in einer Seitenansicht in einer zweiten Ausführungsform;
- Figur 6:: eine Detailansicht von Wellrohren auf einem Montageständer gemäss der zweiten Ausführungsform;
- Figur 7:: eine perspektivische Ansicht auf den einen Montageständer in einer ersten Ausführungsform mit Montageöffnungen für Wellrohre;
- Figur 8:: eine perspektivische Ansicht auf den einen Montageständer in einer zweiten Ausführungsform mit offenen Rohraufnahmen;
- Figur 9:: die erfindungsgemässe PVT-Anlage in einer Ausführungsform mit einer Rohrleitung und
- Figur 10:: die erfindungsgemässe PVT-Anlage in einer weiteren Variante mit einer Rohrleitung.

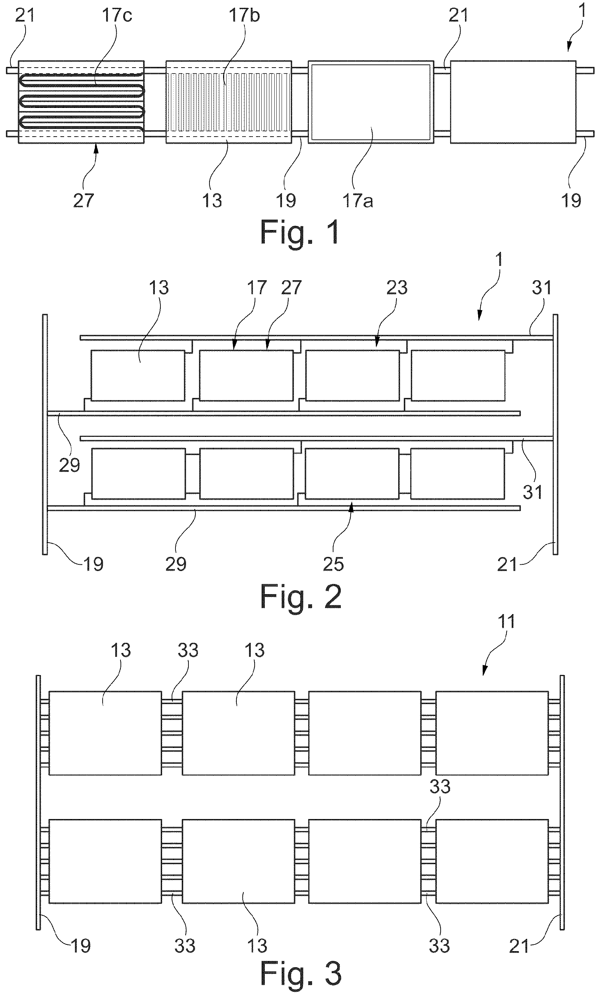

In der Figur 1 und 2 sind PVT-Anlagen gezeigt, welche Stand der Technik sind und gesamthaft mit der Bezugsziffer 1 bezeichnet sind. Die PVT-Anlage 1 umfasst eine Mehrzahl von PV-Modulen 13. An jeder der Rückseiten 15 der PV-Module, welche der Sonne abgewandt sind, ist eine Wärmetauscher 17 angeordnet. Der Wärmetauscher wird von einem Wärmeträgerfluid durchströmt und kann ein Flächenwärmetauscher 17a sein oder in Harfen- oder in Mäanderbauart 17b,17c realisiert sein. Auch können die Wärmetauscher 17 Lamellenbleche zum Wärmeaustausch mit der Umgebungsluft aufweisen. Bei der Ausführungsform gemäss der Figur 1 sind die Wärmetauscher 17 mit einer Vorlaufleitung 19 und einer Rücklaufleitung 21 verbunden. In der Figur 2 sind eine erste PV-Phalanx 23 und eine zweite PV-Phalanx 25 vorhanden. Die PV-Phalanxen 23,25 bestehen aus mehreren PVT-Modulen 27 mit jeweils einem PV-Modul 13 und einem an der Rückseite 15 angeordneten Wärmetauscher 17. Die PVT-Module 27 sind einzeln oder in Serie an eine Vorlauf-Sammelbank 29 und an eine Rücklauf-Sammelbank 31 angeschlossen. Die Beschreibung des Stands der Technik macht deutlich, wie aufwendig jedes PVT-Modul 27 aufgebaut ist. Zusätzlich müssen die einzelnen Wärmetauscher auf der Baustelle zusammengeschlossen und an die Sammelbanken 29,31 oder an die Vorlauf- und die Rücklaufleitung 19,21 angeschlossen werden.

Im Gegensatz zum aufwendigen und dementsprechend teuren Stand der Technik geht die vorliegende Erfindung neue Wege, welche die Produktionskosten der PVT-Anlage 11 und den Installationsaufwand auf der Baustelle deutlich reduziert. Die Wärmetauscher gemäss dem Stand der Technik sind durch eine Mehrzahl von nebeneinander angeordneten Rohrleitungen 33 ersetzt bzw. gebildet (Figur 3). Die Rohrleitungen erstrecken sich über eine Mehrzahl von in einer Reihe angeordneten PV-Modulen 13. Eine aufwendige Herstellung der Wärmetauscher erübrigt sich und die Rohrleitungen müssen lediglich an Montageständern 35 befestigt werden. Die PV-Anlage 11 kann auf einem Flachdach, einem Aufdach, einem Schrägdach usw. aufgestellt sein. Die Rohrleitungen 33 lassen sich auf bis zu 50 m Länge verlegen und können sich dadurch über eine grosse Anzahl an nebeneinander angeordneten PV-Module 13 erstrecken. Einzelne Wärmetausche für jedes PV-Moduls sind dadurch obsolet. Ein Montageständer 35 hat bevorzugt die Gestalt eines rechtwinkeligen Dreiecks mit einem ersten und zweiten Schenkel 37a,37b und einem Montagebalken 39 als Hypotenuse. An den Montagebalken 39 der Montageständer ist eine Rahmenkonstruktion 41 befestigt. Die Rahmenkonstruktion 41 weist an der dem Montagebalken 39 abgewandten Seite offene Rohraufnahmen 43 auf. Bei der Rohrverlegung werden die Rohrleitungen 33 in die offenen Rohraufnahmen 43 eingelegt. Dadurch lässt sich die Wärmetauscher-Konstruktion gebildet aus den Rohrleitungen sehr rasch aufbauen.

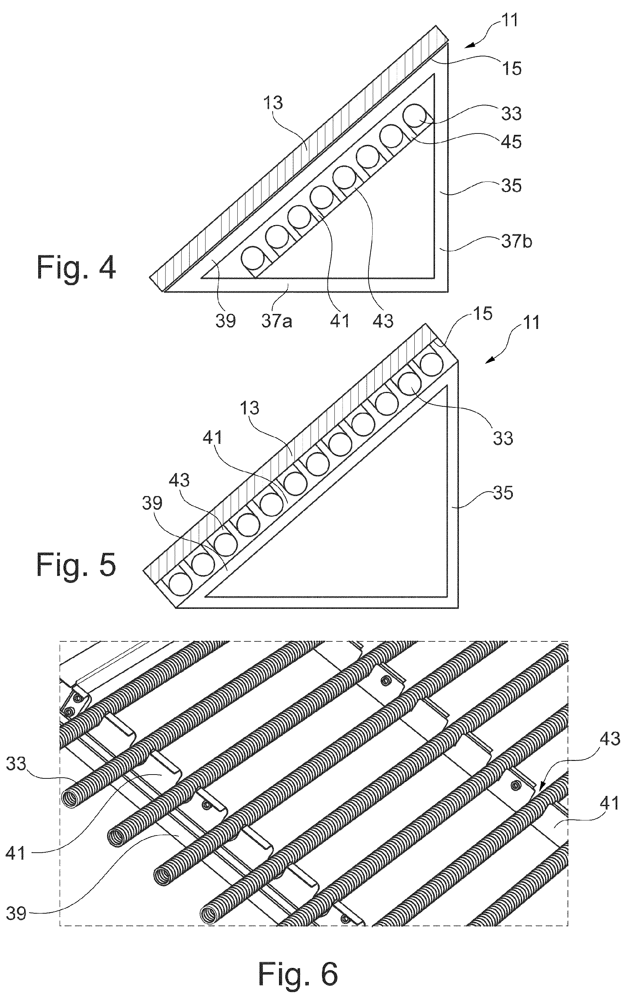

In der ersten Ausführungsform gemäss der Figur 4 ist die Rahmenkonstruktion an der Unterseite der Montagebalken 39 angeordnet. Deshalb sind bei dieser Ausführungsform Halteprofile 45 vorgesehen. Die Halteprofile 45 sind mit der Rahmenkonstruktion 41 verbunden, damit die Rohrleitungen 33 nach dem Einlegen in die Rohraufnahmen 43 aus diesen nicht herausfallen. Diese Variante ist gut für das Nachrüsten einer bestehenden PV-Anlage geeignet, da für die Montage der Rohrleitungen 33 die PV-Module 13 nicht von den Montageständern 35 demontiert werden müssen.

In der zweiten Ausführungsform gemäss der Figur 5 und 6 ist die Rahmenkonstruktion 41 zwischen den Montagebalken 39 und den PV-Modulen 13 in der Rahmenkonstruktion 41 gehalten. In dieser Ausführungsform sind keine Halteprofile 45 notwendig, da die Rohrleitungen 33 durch die Schwerkraft und die auf die Rahmenkonstruktion 41 aufgesetzten PV-Module 13 in den Rohraufnahmen 43 gehalten sind. Bei dieser Ausführungsform lässt sich die Wärmetauscher-Konstruktion besonders rasch und einfach aufbauen.

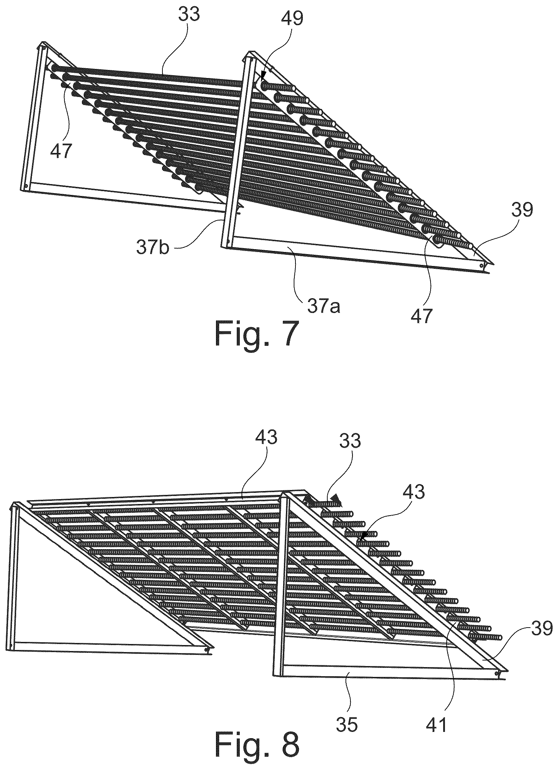

In der Figur 7 (PV-Modul 13 nicht gezeigt) ist eine Befestigung der Wellrohre 33 an dem Montageständer gezeigt, welche ähnlich wie die in Figur 4 ist. An den Montagebalken 39 sind Abhängprofile 47 befestigt und bevorzugt eingehängt, an welchen die Wellrohre 33 unterhalb des Montagebalkens 39 eingezogen sind. Zum Einziehen der Wellrohre 33 sind Durchgangs- bzw. Montageöffnungen 49 an den Abhängprofilen 47 vorgesehen.

In der Figur 8 ist die Ausführungsform aus Figur 5 und 6 in einer perspektivischen Ansicht gezeigt. Der Anschaulichkeit wegen ist das PV-Modul 13, welches auf der Rahmenkonstruktion 41 aufgelegt ist, nicht gezeigt.

Die Rohrleitungen sind parallel geschaltet und verbinden eine Vorlaufleitung 19 mit einer Rücklaufleitung 21. Die Vorlauf- und die Rücklaufleitung 19,21 sind die Leitungen, welche ihren Ursprung in einem Technikraum haben. Die in dem Wärmeträgerfluid gewonnene Wärme wird in dem Technikraum, beispielsweise für Heizzwecke, weiter aufbereitet. Die Rohrleitungen sind biegbare Wellrohre 33. Die Wellrohre 33 lassen sich von einer Trommel abrollen und in der gewünschten Länge in die Rahmenkonstruktion 41 einlegen bzw. einziehen oder einfädeln, wenn die Rahmenkonstruktion 41 nur Durchgangsöffnungen bzw. Montageöffnungen 49 und keine offenen Rohraufnahmen 43 aufweist. Die gewellte Struktur sorgt für eine Oberflächenvergrößerung und dadurch für einen guten Wärmeaustausch an der Rohrwandung. Zudem können die Wellrohre 33 Toleranzen ausgleichen, wenn die Rohraufnahmen nicht perfekt fluchten bzw. in einer Linie liegen. Auch können die biegsamen Wellrohre 33 unter zwei benachbarten PV-Modulen 33 verlegt werden, welche in einem Winkel zueinander positioniert sind.

In überraschender Weise hat sich herausgestellt, dass die Wellrohre 33 ohne einen aufwendigen wärmeleitenden Kontakt zu den PV-Modulen 13 nur durch die Wärmestrahlung von den PV-Modulen über die Umgebungsluft für eine gute Wärmeübertragung in den in den Wellrohren fliesenden Wärmeträgerfluid führen.

Bei einem typischen Ausführungsbeispiel werden folgende Parameter realisiert:
Länge der Wellrohre: 40m
Durchmesser der Wellrohre: 20mm
Abstand benachbarter Rohrmäntel: 60mm
Anzahl der Wellrohre unter den PV-Modulen: 15
Abstand des Mantels eines Wellrohres zu einem PV-Modul: 10mm

Wie die Figur 3 zeigt, können PV-Module 13 in Phalanxen 23,25 angeordnet sein. Unter jede Phalanx erstrecken sich bis zu 20 Wellrohre 33. Die Wellrohre 33 jeder Phalanx können direkt die Vor- und die Rücklaufleitung 19,21 miteinander verbinden, ohne dass Sammelbanken 29,31 notwendig wären, um eine Verbindung zwischen Vor- und Rücklaufleitung herzustellen.

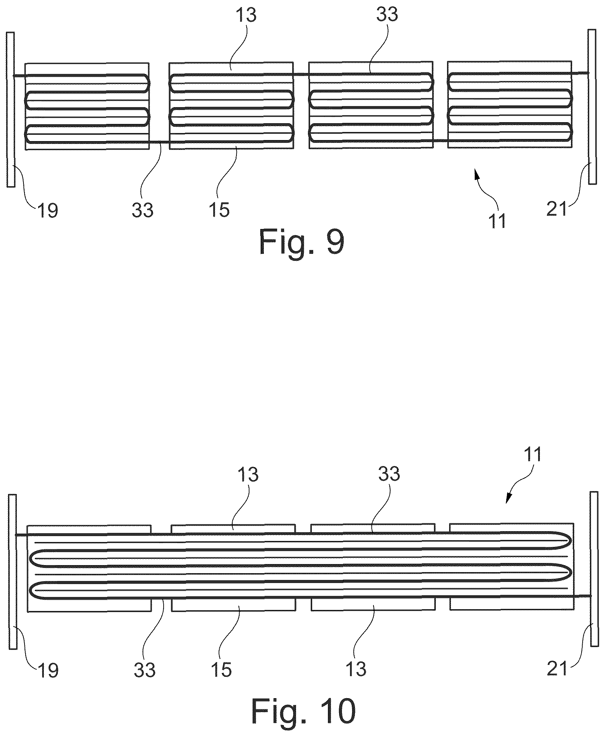

In den Figuren 9 und 10 ist eine weitere denkbare Ausführungsform der Erfindung gezeigt. Die Figuren 9 und 10 zeigen eine Rückansicht der PV-Module 13. Anstatt einer Mehrzahl von Rohrleitungen 33 ist in diesen Ausführungsformen eine einzige Rohrleitung 33 vorhanden, welche die Wärmetauscher 17 ersetzt bzw. bildet. Damit die Wärmeaustauschfläche möglichst gross ist, ist die Rohrleitung 33 an den Rückseiten 15 der PV-Module 13 mäanderförmig verlegt. In der Figur 9 ist gezeigt, dass sich die Mäanderschlingen an der Rückseite 15 eines jeden PV-Moduls 13 erstrecken. In Figur 10 ist gezeigt, dass sich die Mäanderschlingen der Rohrleitung 33 über mehrere PV-Module 13 erstrecken können. Denkbar wären auch andere Verlegungsformen, welche die Wärmeaustauschfläche vergrössern, beispielsweise Spiralformen.

Die erfindungsgemässe PVT-Anlage 11 zeichnet sich dadurch aus, dass anstatt einer Mehrzahl von Wärmetauschern 17, welche an jeder Rückseite eines jeden PV-Moduls 13 befestigt sind, eine oder mehrere Rohrleitungen 33 vorgesehen sind, welche sich über eine grosse Zahl von PV-Modulen erstrecken. Insbesondere Wellrohre 33 lassen sich durch Abrollen in Längen bis zu 100 Metern an der Rückseite der PV-Module befestigen, einlegen oder einziehen. Sowohl der Materialeinsatz als auch die Montagezeit sind dadurch wesentlich geringer als bei PVT-Anlagen des Stands der Technik. Die Wellrohre 33 lassen sich zudem an bestehenden PV-Anlagen mit demselben geringen Arbeits- und Materialeinsatz nachrüsten.

### Legende:

- 1: PVT-Anlage des Stands der Technik
- 11: Erfindungsgemässe PVT-Anlage
- 13: PV-Module
- 15: Rückseite des PV-Moduls
- 17: Wärmetauscher
- 17a, 17b, 17c: Flächenwärmetauscher, Harfenbauart, Mäanderbauart
- 19: Vorlaufleitung
- 21: Rücklaufleitung
- 23: Erste PV-Phalanx
- 25: Zweite PV-Phalanx
- 27: PVT-Modul
- 29: Vorlauf-Sammelbank
- 31: Rücklauf-Sammelbank
- 33: Rohrleitungen, Wellrohre
- 35: Montageständer
- 37a,37b: Erster und zweiter Schenkel.
- 39: Montagebalken
- 41: Rahmenkonstruktion
- 43: Offene Rohraufnahmen
- 45: Halteprofile
- 47: Abhängprofile

## Patentansprüche

1. Photovoltaik-Thermie (PVT)-Anlage (11) zur kombinierten Strom- und Wärmeproduktion aufweisend
- eine Mehrzahl von Photovoltaik(PV)-Modulen (13) und
- eine Mehrzahl von Wärmetauschern (17), welche jeweils an der der Sonne abgewandten Rückseite (15) der PV-Module (13) angeordnet sind und von einem Wärmeträgerfluid durchströmte Leitungen umfassen, wobei die Leitungen in einem Abstand zu den PV-Modulen (13) angeordnet sind,
**dadurch gekennzeichnet,**
**dass** die Wärmetauscher (17) durch wenigstens eine von dem Wärmeträgerfluid durchströmte Rohrleitung (33) gebildet sind, welche Rohrleitung (33) sich über eine Mehrzahl von in einer Reihe angeordneten PV-Modulen (13) erstreckt und eine Vorlaufleitung (19) mit einer Rücklaufleitung (21) verbindet,

2. PVT-Anlage nach Anspruch 1, **dadurch gekennzeichnet, dass** die Wärmetauscher (17) durch eine Mehrzahl von nebeneinander angeordneten Rohrleitungen (33) gebildet sind, welche sich über eine Mehrzahl von in einer Reihe angeordneten PV-Modulen (13) erstrecken, wobei die Rohrleitungen (33) in Parallelschaltung eine Vorlaufleitung (19) mit einer Rücklaufleitung (21) verbinden.

3. PVT-Anlage nach Anspruch 1, **dadurch gekennzeichnet, dass** die Rohrleitung (33) an der Rückseite einzelner PV-Moduls (13) oder sich über mehrere PV-Module (13) erstreckend möglichst flächendeckend und insbesondere mäanderförmig angeordnet ist.

4. PVT-Anlage nach einem der vorangehenden Ansprüche, **dadurch gekennzeichnet, dass** die Rohrleitungen biegbare Wellrohre (33) sind.

5. PVT-Anlage nach einem der vorangehenden Ansprüche, **dadurch gekennzeichnet, dass** die Rohrleitungen (33) frei von thermischen Leitungen zu den PV-Modulen (13) sind, wodurch die Wärmeübertragung von den PV-Modulen (13) auf die Rohrleitungen (33) über die Umgebungsluft durch Wärmestrahlung erfolgt.

6. PVT-Anlage nach einem der vorangehenden Ansprüche, **dadurch gekennzeichnet, dass** die Rohrleitungen (33) eine Länge zwischen 10 und 100 Meter und bevorzugt zwischen 20 und 50 Meter aufweisen.

7. PVT-Anlage nach einem der vorangehenden Ansprüche, **dadurch gekennzeichnet, dass** die PVT-Anlage (11) Montageständer (35) mit schrägen Montagebalken (39) umfasst, an welchen die PV-Module (11) schräg gestellt montiert sind.

8. PVT-Anlage nach Anspruch 7, **dadurch gekennzeichnet, dass** die Rohrleitungen (33) mit Halterungen (41) an den Montagebalken (39) befestigt sind.

9. PVT-Anlage nach Anspruch 7 oder 8, **dadurch gekennzeichnet, dass** die Rohrleitungen (33) in einer Rahmenkonstruktion (41) gehalten sind.

10. PVT-Anlage nach Anspruch 9, **dadurch gekennzeichnet, dass** die Rahmenkonstruktion zwischen den Montagebalken (39) und den PV-Modulen (13) angeordnet ist.

11. PVT-Anlage nach Anspruch 9, **dadurch gekennzeichnet, dass** die Rahmenkonstruktion (41) an der der Rückseite (15) der PV-Module (13) abgewandten Seite der Montagebalken (39) befestigt ist.

12. PVT-Anlage nach Anspruch 9, 10 oder 11, **dadurch gekennzeichnet, dass** die Rahmenkonstruktion (41) offene Rohraufnahmen (43), von dem Montagebalken (39) abgewandt, aufweist und die Rohrleitungen (33) in die offenen Rohraufnahmen (43) eingelegt sind.

13. PVT-Anlage nach einem der vorangehenden Ansprüche, **dadurch gekennzeichnet, dass** die Rohrleitungen (33) einen Durchmesser von 15 bis 35 mm und bevorzugt von 20 bis 30 mm aufweisen, dass der Mantel einer Rohrleitung (33) einen Abstand von 5 bis 100 mm zur Rückseite (15) der PV-Module (13) aufweist, dass sich zwischen 5 und 30 und bevorzugt zwischen 10 und 15 Rohrleitungen (33) an der Rückseite (15) von nebeneinander angeordneten PV-Modulen (13) befinden und dass der Abstand zwischen den Mänteln benachbarter Rohrleitungen (33) zwischen 40 und 350 mm und bevorzugt zwischen 60 und 150 mm beträgt.

14. PVT-Anlage nach einem der vorangehenden Ansprüche, **dadurch gekennzeichnet, dass** eine Mehrzahl von nebeneinander angeordneten PV-Modulen (13) und dahinter liegenden Rohrleitungen (33) eine PV-Phalanx (23,25) bilden und die Rohrleitungen (33) mehrerer Phalanxen (23,25) an die Vorlauf- und die Rücklaufleitung (19,21) angeschlossen sind.

15. PVT-Anlage nach Anspruch 14, **dadurch gekennzeichnet, dass** die Rohrleitungen (33) der PV-Phalanxen (23,25) direkt an der Vorlauf- und der Rücklaufleitung (19,21) angeschlossen sind, ohne dass zwischen eine PV-Phalanx (23,25) und die Rücklauf- bzw. die Vorlaufleitung (19,21) eine Sammelbank (29,31) zwischengeschaltet ist.
